# DEMANDE DE BREVET EUROPEEN

(11) **EP 1 265 394 A1**
(43) Date de publication de la demande: **11.12.2002**
(21) Numéro de dépôt: 02354091.7
(22) Date de dépôt: 05.06.2002
(51) Int. Cl.: H04L 5/02

(54) **Allocation de fréquences en modulation multiporteuses orthogonales**

(30) Priorité: 06.06.2001 FR 0107394
(71) Demandeur: STMicroelectronics S.A., 92120 Montrouge (FR)
(72) Inventeur: Mestdagh, Denis J., 38410 Saint Martin d'Uriage (FR)
(74) Mandataire: de Beaumont, Michel

(57) **Abrégé**

L'invention concerne un procédé de transmission de données entre deux noeuds d'un réseau en multiplexage par division de fréquences orthogonales, consistant : à allouer à chaque noeud au moins un jeu de fréquences d'émission et un jeu de fréquences de réception, le jeu d'émission de chaque noeud étant différent de son propre jeu de réception ; et à utiliser chaque noeud comme relais de réémission d'une transmission qui ne lui est pas destinée.

## Description

La présente invention concerne le domaine des réseaux de communication point-multipoints ou multipoints-multipoints à milieu partagé et, plus particulièrement, les réseaux de communication à accès multiples par division de fréquences orthogonales (FDMA ou FDD).

L'invention sera décrite par la suite en relation avec un exemple d'application aux réseaux utilisant les conducteurs d'alimentation électriques (le secteur) comme support de transmission. On utilise généralement des porteuses haute fréquence qui sont modulées pour transmettre des données entre deux ou plusieurs appareils équipés de modems (modulateur-démodulateur) et raccordés au secteur. De tels réseaux peuvent être utilisés par exemple, pour connecter un micro-ordinateur à ses périphériques (imprimante, numériseur, etc.). Ils peuvent également distribuer, à l'intérieur d'une habitation, d'un bureau ou analogue, des données multimédias issues d'une connexion à un accès extérieur par exemple, une antenne satellite, un câble de fibres optiques, un modem câble, un modem XDSL, etc.

Classiquement, les normes relatives aux réseaux utilisant le secteur d'alimentation comme support de transmission prévoient l'utilisation combinée d'un accès multiple par division de fréquences et d'un accès multiple par division du temps. Il s'agit en fait d'un accès multiple à détection de porteuse et détection de collision ou anti-collision (CSMA/CA). Selon ces normes de transmission, l'accès multiple par division de fréquences est réalisé en utilisant un multiplexage par division de fréquences orthogonales (OFDM).

Il s'agit d'une technique parfaitement connue qui sera brièvement rappelée ci-après. On pourra également se référer à la littérature. Par exemple, l'article "HomePlug Standard Brings Networking to the Home" de Steve Gardner, Brian Markwalter et Larry Yonge, paru en décembre 2000 dans Communication Systems Design, expose l'application d'un tel multiplexage aux réseaux utilisant les câbles d'alimentation électrique comme support de transmission.

Les formes d'ondes OFDM sont générées en utilisant des transformées de Fourier inverses (IFFT) dans lesquelles les points du domaine fréquentiel sont constitués de jeux de symboles complexes qui modulent chaque porteuse. Le résultat de la transformée de Fourier inverse est appelé un symbole OFDM. Côté réception, les données sont reconstituées à partir d'une transformée de Fourier directe qui convertit le symbole OFDM dans le domaine fréquentiel. On notera que tous ces traitements restent numériques.

Chaque modem connecté à n'importe quel noeud du réseau doit pouvoir envoyer des données à n'importe quel autre noeud et recevoir des données provenant de n'importe quel autre noeud.

Comme plusieurs dispositifs peuvent avoir besoin simultanément de transmettre des informations sur le réseau partagé, un mécanisme de contrôle d'accès du moyen de transmission (MAC) est nécessaire pour éviter des collisions qui conduiraient à des pertes d'informations. De plus, comme différents services multimédias ou types de transmission sont susceptibles d'utiliser le même support et que ces différentes transmissions ont le plus souvent des contraintes distinctes en termes de retard, de taux d'erreur de bit etc., on a généralement recours à un mécanisme de gestion de priorité d'accès désigné plus généralement par contrôle de la qualité du service (QOS).

Dans un accès multiple par division de fréquences, chaque noeud du réseau (c'est-à-dire chaque modem connecté au réseau) se voit allouer un jeu prédéfini de fréquences pour émettre des données. Côté réception, il existe deux solutions. Soit, on utilise un canal de contrôle des communications pour indiquer quelles fréquences doivent être reçues et démodulées par chaque dispositif connecté au réseau multipoints-multipoints. Soit, toutes les fréquences de réception sont démodulées par tous les dispositifs et chaque dispositif de réception choisit les informations qui lui sont destinées.

Une particularité des réseaux utilisant les conducteurs d'alimentation comme support de transmission est que la fonction de transfert du réseau varie considérablement en fonction du temps (par exemple, sous l'effet d'un branchement d'un appareil électrique qu'il soit ou non équipé d'un modem), que la fonction de transfert varie d'un noeud à l'autre et le fait qu'il s'agit d'un réseau multitrajets et multiréflexions. Cela entraîne que les émissions d'un modem dans un jeu de fréquences risquent d'être polluées aléatoirement empêchant une réception correcte par un autre modem.

La présente invention vise à proposer une nouvelle technique de transmission de données en multiplexage par division de fréquences orthogonales qui pallie les inconvénients des techniques classiques.

L'invention vise, plus particulièrement, à permettre l'utilisation de circuits de transformées de Fourier de tailles et coûts réduits.

L'invention vise également à améliorer la fiabilité du réseau malgré des variations aléatoires de sa fonction de transfert.

Pour atteindre ces objets et d'autres, la présente invention prévoit un procédé de transmission de données entre deux noeuds d'un réseau en multiplexage par division de fréquences orthogonales, consistant :
à allouer à chaque noeud au moins un jeu de fréquences d'émission et un jeu de fréquences de réception, le jeu d'émission de chaque noeud étant différent de son propre jeu de réception ; et
à utiliser chaque noeud comme relais de réémission d'une transmission qui ne lui est pas destinée.

Selon un mode de réalisation de la présente invention, chaque jeu est alloué une seule fois en émission pour tout le réseau.

Selon un mode de réalisation de la présente invention, chaque jeu est alloué une seule fois en réception pour tout le réseau.

Selon un mode de réalisation de la présente invention, chaque noeud se voit allouer au moins deux jeux d'émission et au moins deux jeux de réception.

Selon un mode de réalisation de la présente invention, les jeux de réception d'un noeud correspondent aux jeux d'émission d'au moins deux autres noeuds distincts.

Selon un mode de réalisation de la présente invention, les jeux d'émission d'un noeud correspondent à des jeux de réception d'au moins deux autres noeuds distincts.

Selon un mode de réalisation de la présente invention, un noeud de rang i compris entre 1 et n se voit allouer en émission les k jeux de fréquences de rang k(i-1)+1 à ki, où k représente le nombre de jeux alloués dans chaque sens à chaque noeud et les jeux de fréquences sont numérotés de 1 à kn.

Selon un mode de réalisation de la présente invention, on adjoint, à chaque symbole transmis, un préfixe cyclique et un suffixe cyclique reproduisant un nombre prédéterminé d'échantillons, respectivement de la fin et du début du symbole.

Selon un mode de réalisation de la présente invention, les instants de début de transmission des symboles depuis tous les noeuds sont synchronisés.

Selon un mode de réalisation de la présente invention, on met en forme les symboles à transmettre de façon à éviter des interférences inter-porteuses.

La présente invention prévoit également un modem d'un réseau de transmission en multiplexage par division de fréquences orthogonales.

Selon un mode de réalisation de la présente invention, le modem comporte des moyens pour détecter, dans un message transmis, s'il est destinataire de ce message et pour, dans la négative, réémettre le message vers un autre noeud du réseau sur un autre jeu de fréquences.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1 représente, de façon très schématique, un réseau de transmission à huit noeuds selon un mode de réalisation préféré de la présente invention ;
la figure 2 illustre le fonctionnement d'un réseau de transmission à quatre noeuds selon le mode de réalisation préféré de la présente invention ; et
la figure 3 illustre un autre mode de réalisation de la présente invention.

Les mêmes éléments ont été désignés par les mêmes références aux différentes figures. Pour des raisons de clarté, seuls les éléments qui sont utiles à la compréhension de l'invention ont été représentés aux figures et seront décrits par la suite. En particulier, les données à transmettre et leur codage éventuel n'ont pas été détaillés et ne font pas l'objet de la présente invention. Les données à transmettre et le codage éventuel de ces données ainsi que leurs protocoles de transmission dépendent des applications, et l'invention pourra être mise en oeuvre quels que soient ces types de données et protocoles de transmission. De plus, les mécanismes de contrôle d'accès et autres mécanismes nécessaires au fonctionnement du réseau (par exemple, gestion de priorité, etc.) n'ont pas été détaillés et leur réalisation est à la portée de l'homme du métier en utilisant des moyens classiques. En outre, la structure interne de chaque modem n'a pas été décrite. Celle-ci est classique sauf précision contraire.

Selon l'invention, chaque noeud du réseau se voit allouer au moins un jeu de fréquences pour ses émissions et au moins un jeu de fréquences de réception. Les jeux de fréquences d'émission et de réception sont différents d'un noeud à l'autre et les fréquences d'émission sont différentes des fréquences de réception pour un même noeud. Cela revient à dire que chaque jeu n'est alloué qu'une fois pour tout le réseau en jeu d'émission et une fois pour tout le réseau en jeu de réception.

Une caractéristique de la présente invention est que chaque noeud sert de relais à une transmission qu'il reçoit et qui ne lui est pas destinée.

De préférence, chaque noeud se voit allouer, en respectant les conditions ci-dessus, au moins deux jeux de fréquences d'émission et au moins deux jeux de fréquences de réception. Le nombre minimal de jeux de fréquences différents correspond alors au double du nombre de noeuds du réseau.

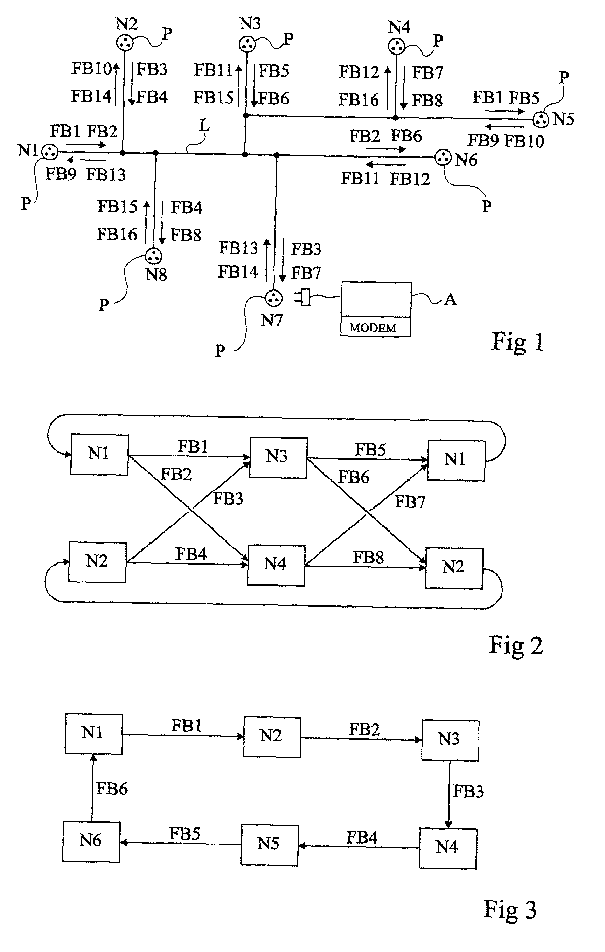

La figure 1 représente, de façon très schématique, un exemple d'architecture d'un réseau de transmission utilisant des conducteurs L d'alimentation électrique comme support de transmission. Le réseau de distribution électrique relie différentes prises P entre elles, le cas échéant par l'intermédiaire d'un tableau de répartition d'alimentation électrique pourvu de disjoncteurs ou analogues (non représentés). Les prises P ont été symbolisées en figure 1 comme étant des prises à trois conducteurs (phase, neutre et terre). Toutefois, il pourra s'agir également de prises ne disposant que de deux conducteurs (phase et neutre). Du point de vue du réseau de transmission, chaque prise est considérée comme un noeud. Dans l'exemple de la figure 1, on suppose un réseau de huit noeuds N1, N2, N3, N4, N5, N6, N7, N8.

Parmi les divers appareils électriques connectés au réseau, des appareils 1 (un seul a été représenté connecté au noeud N7 pour simplifier) sont équipés d'un modem (MODEM) pour communiquer sur le réseau.

D'autres appareils "non-communiquants" sont bien entendu également susceptibles d'être raccordés pour être alimentés par le secteur.

On fera par la suite référence aux noeuds du réseau, étant entendu que cette désignation englobe généralement le modem raccordé sur ce noeud et qui comprend les différents circuits propres à échanger des données.

Selon le mode de réalisation préféré de l'invention, chaque noeud se voit allouer deux jeux de fréquences d'émission et deux jeux de fréquences de réception servant de porteuses aux symboles OFDM émis et reçus. Le tableau I ci-dessous reproduit l'exemple d'allocation des seize jeux de fréquences FB1 à FB16 du réseau de la figure 1.

**Tableau I**

| Noeud | Emission | Réception |
|---|---|---|
| 1 | FB1, FB2 | FB9, FB13 |
| 2 | FB3, FB4 | FB10, FB14 |
| 3 | FB5, FB6 | FB11, FB15 |
| 4 | FB7, FB8 | FB12, FB16 |
| 5 | FB9, FB10 | FB1, FB5 |
| 6 | FB11, FB12 | FB2, FB6 |
| 7 | FB13, FB14 | FB3, FB7 |
| 8 | FB15, FB16 | FB4, FB8 |

Le fait que chaque noeud puisse émettre sur deux jeux de fréquences distincts améliore la fiabilité du réseau. En effet, si un des jeux se trouve dans une bande de fréquences polluée par d'autres appareils connectés sur le réseau (par exemple, des appareils électriques), la transmission peut s'opérer correctement sur l'autre jeu.

L'allocation des jeux de fréquences telle que décrite ci-dessus permet que chaque noeud voulant émettre à destination d'un autre noeud dispose en quelque sorte de plusieurs "chemins" fréquentiels qui, pour certains, transitent par un ou plusieurs autres noeuds du réseau servant alors de relais.

La figure 2 illustre, par une représentation d'un réseau simplifié de quatre noeuds, ce fonctionnement. S'agissant d'un réseau à quatre noeuds (N1 à N4), le nombre de jeux de fréquences est 8 (FB1 à FB8). Les différents chemins ou possibilités de transmission ont été symbolisés par des flèches référencées en fonction du jeu de fréquences utilisé. Le tableau II ci-dessous reproduit les différents jeux de fréquences utilisables pour transmettre d'un noeud à un autre.

**TABLEAU II**

| Noeud de départ | Noeud d'arrivée | Noeud(s) relais(s) | Jeu(x) de fréquences |
|---|---|---|---|
| N1 | N2 | N3 | FB1, FB6 |
| | | N4 | FB2, FB7 |
| N1 | N3 | - | FB1 |
| | | N4, N2 | FB2, FB8, FB3 |
| N1 | N4 | - | FB2 |
| | | N3, N2 | FB1, FB6, FB4 |
| N2 | N3 | - | FB3 |
| | | N4, N1 | FB4, FB7, FB1 |
| N2 | N4 | - | FB4 |
| | | N3, N1 | FB3, FB5, FB2 |
| N2 | N1 | N3 | FB3, FB5 |
| | | N4 | FB4, FB7 |
| N3 | N4 | N1 | FB7, FB1 |
| | | N2 | FB6, FB3 |
| N3 | N1 | - | FB5 |
| | | N2, N4 | FB6, FB4, FB7 |
| N3 | N2 | - | FB6 |
| | | N1, N4 | FB5, FB2, FB8 |
| N4 | N1 | - | FB7 |
| | | N2, N3 | FB8, FB3, FB5 |
| N4 | N2 | - | FB8 |
| | | N1, N3 | FB7, FB1, FB6 |
| N4 | N3 | N1 | FB7, FB1 |
| | | N2 | FB8, FB3 |

On voit bien que, quel que soit le noeud d'émission, il dispose de deux chemins utilisant des jeux de fréquences différents pour atteindre n'importe quel autre noeud. Le "prix" à payer est un léger allongement des durées de transmission en raison des relais éventuels. Toutefois, ce prix est dérisoire comparé à l'avantage considérable de pouvoir communiquer avec n'importe quel noeud d'un réseau en utilisant des circuits de transformées de Fourier simplifiés pour ne traiter que deux jeux de fréquences en transformée inverse (émission) et deux jeux de fréquences en transformée directe (réception), et ce quelle que soit la taille (nombre de noeuds) du réseau.

Un autre avantage de l'invention est que le réseau peut s'adapter en temps réel aux éventuels changements de la fonction de transfert en choisissant l'un ou l'autre des chemins disponibles.

En variante, on peut allouer plus de deux jeux de fréquences à chaque noeud et chaque sens de transmission. Cela augmente le nombre de chemins possibles, donc la robustesse du réseau vis-à-vis des perturbations, mais requiert des circuits de transformées de Fourier de plus en plus gros.

La figure 3 illustre le fonctionnement d'un réseau à six noeuds selon un autre mode de réalisation de l'invention. Selon ce mode de réalisation, on alloue un jeu de fréquences d'émission et un jeu de fréquences de réception à chaque noeud du réseau et cette allocation est circulaire. En d'autres termes, une transmission entre deux noeuds du réseau requiert entre 0 et n-2 relais, où n représente le nombre de noeuds du réseau, donc entre une et n-1 transmissions entre deux noeuds communiquant directement. Par rapport au mode de réalisation préféré, le mode de réalisation de la figure 3 n'accroît pas la robustesse du réseau mais répond à l'objectif de simplifier les circuits des modems.

Un avantage de la présente invention est qu'elle ne nécessite pas de canal de commande pour gérer le réseau. En effet, chaque noeud sert de relais (répéteur) et décide si les données reçues lui sont destinées ou doivent être retransmises vers un autre noeud. De façon parfaitement classique, le destinataire est inclus dans une en-tête de message, et le modem récepteur peut donc déterminer s'il est destinataire une fois qu'il a démodulé le message. Cette démodulation est de toute façon nécessaire pour faire suivre éventuellement le message vers un autre noeud en le remodulant dans la mesure où les porteuses sont alors différentes.

La gestion des jeux de fréquences peut être effectuée de différentes façons.

Une fois les jeux de fréquences alloués, chaque modem détient, par exemple en mémoire, une table d'allocation des différents jeux de fréquences aux différents noeuds de tout le réseau. Il peut donc, à la réception d'un message à faire suivre, savoir quel chemin emprunter.

Les allocations de fréquences sont effectuées par des moyens classiques en tenant compte des critères de l'invention et du fait que la modulation est une modulation d'amplitude et quadrature de phase. On peut recourir à des constellations de plus ou moins de points (par exemple, compris entre 4 et 1024 points) selon le rapport signal/bruit. On veillera seulement de façon parfaitement classique à ne pas chevaucher le point de constellation voisin par le bruit du point concerné.

Pour faciliter la séparation des fréquences par des moyens de filtrage (analogiques ou numériques selon le mode de réalisation) et le traitement par les circuits de transformées de Fourier, les jeux de fréquences sont préférentiellement regroupés en bandes de fréquences plutôt qu'entrelacés avec des fréquences d'autres jeux.

L'allocation des jeux fréquences peut être effectuée de différentes façons, pourvu de respecter les fonctionnalités décrites. De préférence, les jeux de fréquences sont répartis afin de maximiser le nombre de noeuds pouvant communiquer avec des jeux différents. Toutefois, en fonction d'autres contraintes (par exemple, liées aux débits souhaités qui peuvent être différents selon les noeuds, aux gestions de priorités, aux particularités de mise en oeuvre), on pourra utiliser d'autres distributions des jeux de fréquences.

Selon un premier exemple, chaque modem s'alloue lui-même ses propres bandes à partir des bandes disponibles quand il se connecte au réseau. On utilise soit encore une table d'allocation, soit un algorithme d'affectation à la portée de l'homme du métier. On utilise alors des sous-bandes de signalisation dans chaque bande ou jeu de fréquences. Ces sous-bandes transportent la même information. Le premier modem transmet l'identification des jeux de fréquences qu'il a choisi dans la sous-bande de signalisation. Le modem suivant à se connecter lit ces informations et en tient compte pour choisir ses propres jeux de fréquences.

Selon un deuxième exemple, les jeux de fréquences sont préprogrammés par des moyens logiciels ou matériels (barrette de commutateurs mécaniques) dans chaque modem.

Dans le mode de réalisation préféré de la figure 1, l'allocation des jeux de fréquences est effectuée en appliquant les relations suivantes. On désigne par i, un numéro d'ordre (compris entre 1 et n, où n représente le nombre de noeuds du réseau) arbitraire donné à chaque modem ou noeud (dans l'exemple, N1 à N8). On désigne par j, un numéro d'ordre arbitraire donné à chaque jeu de fréquences (de préférence, les numéros successifs ne correspondent pas à des jeux de fréquences de valeurs successives). Dans l'exemple de la figure 1, j est compris entre 1 et 16 (1 et 2n). Pour les jeux d'émissions, les jeux sont alloués dans l'ordre, deux par deux. Le modem de rang i se voit donc allouer les jeux de rang j=2i-1 et j=2i. Plus généralement, en désignant par k le nombre de jeux alloués à chaque noeud, un noeud de rang i se voit allouer les k noeuds de rang j compris entre k(i-1)+1 et ki.

Pour les jeux de réception, les jeux sont répartis pour qu'un même modem ne se voit allouer que des jeux de rangs j différents les uns des autres et des jeux d'émission. Il existe de très nombreuses possibilités, et l'homme de l'art sera à même de choisir une méthode d'allocation adaptée.

L'allocation des jeux de fréquences peut être effectuée de façon dynamique. Par exemple, l'algorithme d'allocation peut tenir compte de la qualité de réception des différents canaux pour sélectionner le chemin à emprunter.

Pour garantir un fonctionnement optimal des transformées de Fourier directes en réception, on prévoit préférentiellement, dans chaque flux de transmission, un préfixe et un suffixe cycliques pour chaque symbole OFDM transmis. Cela revient, dans le domaine temporel et à l'émission de chaque symbole, à reproduire un nombre prédéterminé d'échantillons, respectivement de la fin et du début du symbole, et à insérer ces reproductions au début et à la fin du symbole pour remplir les intervalles inter-symboles. Le nombre d'échantillons reproduit (ou la durée des préfixes et suffixes) est le même pour tous les flux de transmission, mais les préfixes peuvent avoir des durées différentes de celles des suffixes.

Le préfixe cyclique de chaque symbole revient, dans le domaine temporel, à prévoir une réplique des quelques dernières micro-secondes du symbole OFDM que l'on recopie avant le symbole, dans le temps mort séparant deux symboles. Le rôle du préfixe cyclique est d'absorber les interférences inter-symboles qui viennent du fait que le retard d'un canal n'est pas constant avec la fréquence (c'est-à-dire réponse impulsionnelle du canal de transmission). Le recours à un préfixe cyclique pour des symboles OFDM dans un réseau utilisant le secteur comme support de transmission est connu de l'article "HomePlug Standard Brings Networking to the Home" susmentionné.

Le préfixe et le suffixe prévus par l'invention servent à éviter le recours à des filtres analogiques. En effet, en répétant une partie des données en début et en fin de symbole, on évite les discontinuités en réception de différents symboles reçus simultanément par différents noeuds. De telles discontinuités se traduisent, côté réception lors de la transformée de Fourier directe, par du bruit s'étendant sur les fréquences (porteuses) adjacentes, ce qui est néfaste à une réception correcte. Comme, selon l'invention, les temps morts entre symboles sont remplis dans le domaine temporel par les données répétées et que le fonctionnement d'une transformée de Fourier directe est cyclique, le point de départ de prise en compte d'un symbole peut varier à l'intérieur de l'intervalle contenant le signal, c'est-à-dire la durée du symbole plus les préfixes et suffixes, sans qu'aucune information soit perdue. Cela revient à dire que les porteuses des différents symboles conservent leur orthogonalité dans le domaine fréquentiel. On peut donc ne plus recourir à des filtres analogiques mais se contenter de démoduler les fréquences de réception allouées au récepteur. Cela est rendu possible car, de plus, chaque modem (plus généralement, chaque noeud) se voit allouer un jeu de fréquences d'émission et un jeu de fréquences de réception.

De plus, l'invention ne requiert pas d'accès multiples par division du temps, ce qui a pour conséquence une plus grande capacité globale, ainsi qu'un contrôle de priorité et de gestion de qualité de service plus efficace.

La longueur du suffixe cyclique est choisie en fonction des délais de propagation du réseau et, plus précisément, du délai de réflexion ou de réception des signaux sur un noeud donné. De préférence, l'émission des différents modems est synchronisée de sorte que tous les modems connectés aux noeuds du réseau émettent en même temps, ou les symboles sont mis en forme avant transmission pour éviter les interférences inter-porteuses. Dans ce cas, la durée du suffixe cyclique peut être avantageusement limitée à une fois le temps de propagation maximal du réseau, en tenant compte de toutes les réflexions et de tous les trajets (multitrajets) possibles.

On peut éviter le recours à une synchronisation des émissions en mettant en forme les symboles OFDM à transmettre de façon à éviter, en réception sur un même noeud, les interférences inter-porteuses de plusieurs symboles émis par des noeuds différents. Une telle technique de mise en forme ("shaping") est parfaitement connue dans d'autres domaines d'application des symboles OFDM comme, par exemple, la réception de signaux vidéo sur des antennes de réception de signaux hertziens terrestres (antenne en râteau) ou la téléphonie, et est décrite, par exemple, dans l'article "Zipper VDSL: A Solution for Robust Duplex Communication over Telephone Lines" de Denis J. G. Mestdagh, Mikael R. Isaksson et Per Ödling, paru en mai 2000 dans la revue IEEE Communications Magazine, pages 90 à 96. Une telle mise en forme impose toutefois de grouper les porteuses de chaque jeu alloué à chaque noeud.

Pour éviter le recours à des égaliseurs complexes en réception afin d'éviter des interférences inter-symboles, la durée des préfixes cycliques est supérieure (au moins égale) à la réponse impulsionnelle du réseau de transmission.

On notera que, pour la mise en oeuvre de l'invention, il est indispensable que tous les symboles OFDM aient la même longueur (durée T). Cette longueur est définie par l'écart Δf entre deux porteuses successives de la modulation en quadrature d'amplitude et de phase (T = 1/Δf).

La synchronisation éventuelle des noeuds du réseau peut être effectuée de façon autonome. Par exemple, on peut utiliser un canal de signalisation qui véhicule un signal de référence temporel du réseau. On suppose que tous les modems sont branchés sur des prises de raccordement secteur. A l'allumage d'un des modems, celui-ci envoie de façon permanente un signal OFDM particulier constitué de données prédéfinies sur un jeu de fréquences de signalisation prédéfinies. A la réception par un autre modem allumé, ce dernier renvoie immédiatement un signal de réponse sur une autre fréquence de signalisation prédéfinie. Lorsque le premier modem reçoit la réponse, il peut calculer la durée qui devient alors la durée de propagation qu'il renvoie dans un canal spécifique. A la réception du contenu de ce canal, le deuxième modem connaît désormais la durée à appliquer pour une transmission à ses propres signaux OFDM, de sorte que les deux modems susmentionnés sont désormais capables d'émettre des signaux en même temps.

Pendant cette phase d'initialisation, il peut se produire des collisions si un autre modem effectue la même opération que le deuxième. Ce problème peut être résolu en prévoyant des mécanismes aléatoires qui consistent, lorsqu'une collision intervient, à placer chaque noeud dans un mode d'attente pendant une durée déterminée par un générateur aléatoire. Ce générateur aléatoire autorise de nouveau le modem concerné à redémarrer certains cycles d'initialisation ultérieurement.

Bien entendu, la présente invention est susceptible de diverses variantes et modifications qui apparaîtront à l'homme de l'art. En particulier, la mise en oeuvre du procédé de transmission de l'invention est à la portée de l'homme du métier à partir des indications fonctionnelles données ci-dessus. De plus, bien que l'invention ait été décrite en relation plus particulière avec un réseau utilisant les câbles d'alimentation comme support de transmission, celle-ci pourra s'appliquer également à tout autre réseau point-multipoints ou multipoints-multipoints dans lequel des problèmes similaires se posent. A titre d'exemple, on citera les applications aux communications sans fil dans lesquelles se posent les problèmes de variation de la fonction de transfert en fonction du temps, et qui sont multitrajets et multiréflexions.

## Revendications

1. Procédé de transmission de données entre deux noeuds (N) d'un réseau en multiplexage par division de fréquences orthogonales, **caractérisé en ce qu'**il consiste :
à allouer à chaque noeud au moins un jeu de fréquences d'émission (FB) et un jeu de fréquences de réception (FB), le jeu d'émission de chaque noeud étant différent de son propre jeu de réception ; et
à utiliser chaque noeud comme relais de réémission d'une transmission qui ne lui est pas destinée.

2. Procédé selon la revendication 1, **caractérisé en ce que** chaque jeu (FB) est alloué une seule fois en émission pour tout le réseau.

3. Procédé selon la revendication 1 ou 2, **caractérisé en ce que** chaque jeu (FB) est alloué une seule fois en réception pour tout le réseau.

4. Procédé selon l'une quelconque des revendications 1 à 3, **caractérisé en ce que** chaque noeud se voit allouer au moins deux jeux d'émission et au moins deux jeux de réception.

5. Procédé selon la revendication 4, **caractérisé en ce que** les jeux de réception d'un noeud correspondent aux jeux d'émission d'au moins deux autres noeuds distincts.

6. Procédé selon la revendication 4 ou 5, **caractérisé en ce que** les jeux d'émission d'un noeud correspondent à des jeux de réception d'au moins deux autres noeuds distincts.

7. Procédé selon les revendications 5 et 6, **caractérisé en ce qu'**un noeud de rang i compris entre 1 et n se voit allouer en émission les k jeux de fréquences de rang k(i-1)+1 à ki, où k représente le nombre de jeux alloués dans chaque sens à chaque noeud et les jeux de fréquences sont numérotés de 1 à kn.

8. Procédé de transmission selon l'une quelconque des revendications 1 à 7, **caractérisé en ce qu'**il consiste à adjoindre, à chaque symbole transmis, un préfixe cyclique et un suffixe cyclique reproduisant un nombre prédéterminé d'échantillons, respectivement de la fin et du début du symbole.

9. Procédé selon la revendication 8, **caractérisé en ce que** les instants de début de transmission des symboles depuis tous les noeuds sont synchronisés.

10. Procédé selon la revendication 8, **caractérisé en ce qu'**il consiste en outre à mettre en forme les symboles (OFDM) à transmettre de façon à éviter des interférences inter-porteuses.

11. Modem d'un réseau de transmission en multiplexage par division de fréquences orthogonales, **caractérisé en ce qu'**il comporte des moyens pour, lorsqu'il est connecté à un noeud du réseau, mettre en oeuvre le procédé de transmission selon l'une quelconque des revendications 1 à 10.

12. Modem selon la revendication 11, **caractérisé en ce qu'**il comporte des moyens pour détecter, dans un message transmis, s'il est destinataire de ce message et pour, dans la négative, réémettre le message vers un autre noeud du réseau sur un autre jeu de fréquences.
